# EUROPÄISCHE PATENTSCHRIFT

(11) **EP 3 602 217 B1**
(45) Veröffentlichungstag und Bekanntmachung des Hinweises auf die Patenterteilung: **24.03.2021**
(21) Anmeldenummer: 18743431.1
(22) Anmeldetag: 10.07.2018
(51) Int. Cl.: B23Q 1/52, B23Q 7/02, B23Q 16/02, F16H 53/02

(54) **TRANSPORTVORRICHTUNG ZUR ROTATORISCHEN UND/ODER LINEAREN BEWEGUNG EINES WERKSTÜCKS**
TRANSPORT DEVICE FOR ROTATABLY AND/OR LINEARLY MOVING A WORKPIECE
DISPOSITIF DE TRANSPORT PERMETTANT UN DÉPLACEMENT ROTATIF ET/OU LINÉAIRE D'UNE PIÈCE

(30) Priorität: 20.07.2017 DE 102017116414
(43) Veröffentlichungstag der Anmeldung: 05.02.2020
(73) Patentinhaber: Weiss GmbH, 74722 Buchen (Odw.) (DE)
(72) Erfinder: GÖTZINGER, Martin, 74722 Buchen (DE); SIMON, Uwe, 74722 Buchen (DE)
(74) Vertreter: Manitz Finsterwald Patent- und Rechtsanwaltspartnerschaft mbB
(86) Internationale Anmeldenummer: PCT/EP2018/068703
(87) Internationale Veröffentlichungsnummer: WO 2019/016038

(56) Entgegenhaltungen:
- DE-A1-102009 049 618

## Beschreibung

Die vorliegende Erfindung betrifft eine Transportvorrichtung zur rotatorischen und/oder linearen Bewegung eines Werkstücks mit einem zur Aufnahme des Werkstücks geeigneten Transportelement, das mittels eines Motors rotatorisch und/oder linear von einer ersten Ruheposition in eine zweite Ruheposition bewegbar ist, wobei das Transportelement antriebswirksam mit zumindest einem Mitnehmer verbunden ist, der in eine Antriebsnut einer Kurventrommel eingreift, die von dem Motor antreibbar ist, der mittels einer programmierbaren Steuervorrichtung auf Grundlage einer Motorsteuerkurve ansteuerbar ist. Solch eine Transportvorrichtung ist der Art nach im Wesentlichen aus der DE 10 2009 049 618 A1 bekannt.

Zur Bewegung eines Werkstücks können unterschiedlichste Vorrichtungen zum Einsatz kommen. Zur Erzeugung einer linearen bzw. translatorischen Bewegung bieten sich beispielsweise ein Transportband oder ein von einem Linearmotor verfahrbarer Greifer an. Vorzugsweise können Werkstückträger mittels eines Linearmontagesystems einer linearen Transportbewegung unterworfen werden. Soll das Werkstück in eine Drehbewegung versetzt werden, finden oftmals sogenannte Rundschalttische Verwendung. Derartige Rundschalttische sind grundsätzlich aus dem Stand der Technik in unterschiedlichen Ausführungsformen bekannt. Sie dienen beispielsweise dazu, auf einem als Drehteller ausgebildeten Abtriebsflansch angeordnete Werkstücke jeweils durch eine Rotation des Abtriebsflanschs von einer Bearbeitungs- oder Montagestation zu einer nächsten Bearbeitungs- oder Montagestation zu transportieren. Dieser Transport kann im Rahmen eines Taktbetriebs erfolgen, bei dem der Drehteller mit jedem Takt um ein bestimmtes Winkelmaß gedreht wird.

Sowohl bei einer linearen Transportbewegung als auch bei einer rotatorischen Transportbewegung kommt es häufig auf die Einhaltung geringer Toleranzen bzw. auf die Präzision an. Mit anderen Worten soll das Werkstück aus der ersten Ruheposition zuverlässig und präzise in eine vorbestimmte zweite Ruheposition bewegt werden. In vielen Fällen ist es dabei nicht nur erforderlich, dass die zweite Ruheposition exakt eingenommen wird, sondern auch ein Bewegungsprofil des Werkstücks zwischen den beiden Ruhepositionen muss vorgegebene Randbedingungen wie beispielsweise vorgegebenen Geschwindigkeiten oder vorgegebenen Beschleunigungen gehorchen.

Ferner kann als weitere Anforderung hinzukommen, dass der Transport möglichst energiesparend erfolgen soll. Die verwendeten Transportvorrichtungen sollen dabei möglichst unter Beibehaltung der üblichen Leistungsfähigkeit und bei gleicher Präzision möglichst wenig Energie verbrauchen. Zwar sind gewisse Einsparungspotentiale - beispielsweise durch Verringerung der Reibung zwischen den einzelnen Bauteilen - vorhanden, allerdings sind konstruktive Änderungen häufig mit höheren Herstellungs- und/oder Wartungskosten verbunden, so dass Optimierungen in diesem Bereich schnell an wirtschaftliche Grenzen stoßen.

Es ist daher eine Aufgabe der vorliegenden Erfindung, eine Transportvorrichtung zur rotatorischen und/oder linearen Bewegung eines Werkstücks von einer ersten Ruheposition in eine zweite Ruheposition anzugeben, die einen möglichst effizienten Betrieb ermöglicht, ohne dass wesentliche Abstriche bei der Präzision oder der Dynamik der Transportbewegung in Kauf genommen werden müssen.

Die Lösung dieser Aufgabe erfolgt durch eine Transportvorrichtung mit den Merkmalen des Anspruchs 1 zur Bewegung eines Werkstücks von einer ersten Ruheposition in eine zweite Ruheposition und insbesondere dadurch, dass die beispielsweise als Antriebsnut ausgebildete mechanische Steuerkurve der Kurventrommel zumindest bereichsweise eine variable, d.h. eine nicht konstante, Steigung aufweist, und dass die Motorsteuerkurve ebenfalls zumindest bereichsweise eine variable bzw. zeitlich veränderliche Steigung aufweist, wobei die Bewegung des Transportelements aus einer gleichzeitigen Überlagerung eines ersten Bewegungsanteils, der auf einem Bereich variabler Steigung der Antriebsnut bzw. der mechanischen Steuerkurve basiert, und eines zweiten Bewegungsanteils resultiert, der auf einem Bereich variabler Steigung der Motorsteuerkurve basiert. Die Motorsteuerkurve gibt dabei einen von der Zeit abhängigen Drehwinkel ϕ des Motors zur Erzielung eines gewünschten Bewegungsprofils des Transportelements an, so dass der dem Motor zugeführte Strom auf Grundlage der Motorsteuerkurve geregelt werden kann.

Erfindungsgemäß wird somit erstmals eine Transportvorrichtung vorgeschlagen, bei der das Bewegungsprofil des zu transportierenden Werkstücks bzw. des Transportelements einerseits wie bei einem herkömmlichen fest taktenden System in einer variablen mechanischen Steuerkurve und andererseits wie bei einem herkömmlichen frei programmierbaren System in einer zeitlich veränderlichen bzw. variablen Motorsteuerkurve hinterlegt ist, wobei zu jedem Zeitpunkt die Bewegungsanteile, die einerseits aus der mechanischen Steuerkurve und andererseits aus der Motorsteuerkurve resultieren, derart aufeinander abgestimmt sind, dass das Transportelement einem vorgegebenen bzw. gewünschten Bewegungsprofil folgt.

Ist also beispielsweise Ausgangspunkt für eine bestimmte Transportaufgabe ein vorgegebenes Bewegungsprofil des Werkstücks zwischen den beiden Ruhepositionen, so können die mechanische Steuerkurve einerseits und die Motorsteuerkurve andererseits derart optimiert werden, dass das vorgegebene Bewegungsprofil möglichst genau eingehalten wird. Gleichermaßen ist es möglich, zur Erzielung eines gewünschten Bewegungsprofils des Werkstücks zwischen den beiden Ruhepositionen beispielsweise eine im Rahmen gewisser Grenzen beliebig gewählte mechanische Steuerkurve vorzugeben und die Motorsteuerkurve entsprechend anzupassen, so dass durch Überlagerung der beiden Bewegungsanteile, die aus der mechanischen Steuerkurve einerseits und der Motorsteuerkurve andererseits resultieren, das gewünschte Bewegungsprofil hervorgeht.

Zusätzlich kann die Motorsteuerkurve auf Grundlage der Dynamik des jeweiligen Motors optimiert werden, so dass der Motor stets in der Nähe seines optimalen Betriebspunkts bzw. in der Nähe seines optimalen Drehmomentbereichs betrieben werden kann. Hierdurch lässt sich gegenüber herkömmlichen Systemen ein deutlicher Energieeinsparungseffekt erzielen, wodurch im Ergebnis gegenüber herkömmlichen Systemen für ein und dieselbe Transportaufgabe ein weniger leistungsstarker Motor zum Einsatz kommen kann. Ferner kann durch Anpassung der Motorsteuerkurve und/oder der mechanischen Steuerkurve der Kurventrommel der maximale Ruckwert des Bewegungsprofils des Werkstücks klein gehalten werden.

Im Folgenden wird nun auf bevorzugte Ausführungsformen der Erfindung eingegangen. Weitere Ausführungsformen können sich aus den abhängigen Ansprüchen, der Figurenbeschreibung sowie den Zeichnungen ergeben.

So kann es gemäß einer Ausführungsform vorgesehen sein, dass der Motor auf Grundlage eines Bereichs variabler Steigung der Motorsteuerkurve während eines Zeitfensters ansteuerbar ist, in dem sich der zumindest eine Mitnehmer in einem Bereich variabler Steigung der mechanischen Steuerkurve befindet. Anders ausgedrückt kann sich der zumindest eine Mitnehmer in einem Bereich variabler Steigung der mechanischen Steuerkurve während eines Zeitfensters befinden, in dem ein Bereich variabler Steigung der Motorsteuerkurve zur Ansteuerung des Motors aktiv ist.

Gemäß einer weiteren Ausführungsform weist die mechanische Steuerkurve weder an einer der ersten Ruheposition entsprechenden Stelle noch an einer der zweiten Ruheposition entsprechenden Stelle und auch nicht dazwischen einen Rastgang, d.h. einen Bereich mit der Steigung Null, auf. Bei herkömmlichen taktenden Systemen werden derartige Rastgänge hingegen benötigt, um den Motor auf seine Nenndrehzahl zu beschleunigen. Demgegenüber können erfindungsgemäß derartige Rastgangphasen entfallen, da das Beschleunigen des Motors bzw. der Bewegungsanteil, der hieraus resultiert, mit dem Bewegungsanteil, der aus der mechanischen Steuerkurve resultiert, derart überlagert wird, dass das resultierende Bewegungsprofil des Werkstücks einem vorgegebenen Bewegungsprofil entspricht. Dadurch, dass die mechanische Steuerkurve keinen Rastgang aufweist, kann die Taktzeit gegenüber herkömmlichen taktenden Systemen bei gleicher Motorgröße ohne die Erhöhung mechanischer Belastungen verkürzt werden.

Zwar kann es zur Erzielung der zuvor beschriebenen vorteilhaften Wirkungen hinreichend sein, wenn die mechanische Steuerkurve und die Motorsteuerkurve jeweils einen oder mehrere Bereiche aufweist/aufweisen, wo sie variabel bzw. nicht konstant ist; gemäß einer bevorzugten Ausführungsform kann es jedoch vorgesehen sein, dass die Steigung der mechanischen Steuerkurve zwischen einer der ersten Ruheposition entsprechenden Stelle der mechanischen Steuerkurve und einer der zweiten Ruheposition entsprechenden Stelle der mechanischen Steuerkurve durchweg variabel ist und insbesondere keine Bereiche konstanter Steigung aufweist. In entsprechender Weise kann die Motorsteuerkurve und insbesondere deren Steigung zwischen einer der ersten Ruheposition entsprechenden Stelle und einer der zweiten Ruheposition entsprechenden Stelle durchweg variabel sein und keinen konstanten Kurvenbereich aufweisen. Dies ermöglicht eine Optimierung der mechanischen Steuerkurve und der Motorsteuerkurve über das gesamte Bewegungsprofil des Werkstücks zwischen den beiden Ruhepositionen hinweg, wodurch der Energieverbrauch der Transportvorrichtung in der gewünschten Weise minimiert werden kann.

Gemäß einer bevorzugten Ausführungsform kann das Transportelement ein Werkstückträger eines Linearmontagesystems sein, der entlang einer Schiene des Linearmontagesystems beweglich geführt ist.

Gemäß einer anderen Ausführungsform kann das Transportelement ein als Drehteller ausgebildeter Abtriebsflansch eines Rundschalttischs sein.

Im Folgenden wird die Erfindung nun rein exemplarisch unter Bezugnahme auf die Zeichnungen erläutert, in denen:
- Fig. 1a - 1c: eine Ausführungsform einer als Rundschalttisch ausgebildeten Transportvorrichtung in unterschiedlichen Ansichten zeigen; und
- Fig. 2a - 2c: eine Ausführungsform einer als Lineartransportsystems ausgebildeten Transportvorrichtung in unterschiedlichen Ansichten zeigen.

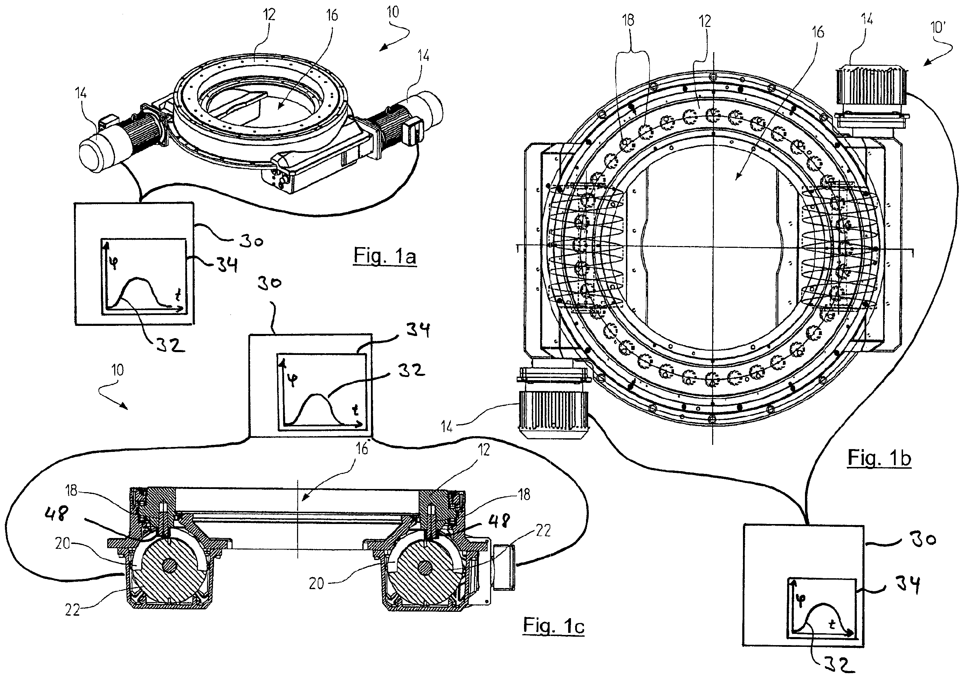

Die Fig. 1a zeigt perspektivisch einen Rundschalttisch 10, der bei der hier konkret dargestellten Ausführungsform einen ringförmigen Abtriebsflansch 12 bzw. Drehteller 12 aufweist, der von zwei Motoren 14 zu einer Drehbewegung angetrieben wird. Anstelle den Abtriebsflansch 12 gemäß der hier dargestellten Ausführungsform mittels zweier Motoren 14 anzutreiben, kann der Abtriebsflansch 12 auch in an sich bekannter weise über nur einen einzigen Motor oder über mehr als zwei Motoren angetrieben werden. Bei der hier dargestellten Ausführungsform ist der Abtriebsflansch 12 ringförmig ausgebildet und umschließt eine zentrale Öffnung 16, in der sich beispielsweise ein oder mehrere Bearbeitungsmaschinen zur Bearbeitung von auf dem Drehteller 12 befestigten Werkstücken befinden können.

Die Fig. 1b zeigt im Wesentlichen die Ausführungsform der Fig. 1a in einer Draufsicht, wobei gestrichelt eingezeichnete Mitnehmer 18 zu erkennen sind, die beispielweise als Rollenbolzen ausgebildet sein können und an der - in Gebrauchslage - unteren Seite des Abtriebsflansch 12 antriebswirksam mit diesem verbunden sind. Lediglich die Motoren 14 sind anders dimensioniert als die in der Fig. 1a gezeigten Motoren 14.

Wie in der Fig. 1c ersichtlich, greifen die Mitnehmer 18 und insbesondere an denselben drehbar gelagerte die Kurvenrollen 48 in Antriebsnuten 20 ein, die in von den beiden Motoren 14 zu einer Drehbewegung angetriebenen Kurventrommeln 22 ausgebildet sind. Durch die Drehbewegungen der Kurventrommeln 22 werden die Mitnehmer 18 mitgeschleppt, die in die spiralförmig die Kurventrommeln 22 umlaufenden Antriebsnuten 20 eingreifen, wodurch der Drehteller 12 zu einer Drehbewegung angetrieben wird. Die Antriebsnuten 20 bilden somit eine mechanische Steuerkurve, da durch deren Steigung unter anderem das Bewegungsprofil des Drehtellers 12 bestimmt wird.

Grundsätzlich können die Motoren 14 und die Kurventrommeln 22 koaxial angeordnet sein. Bei der vorliegenden Ausführungsform ist jedoch ein (nicht gezeigtes) Getriebe zwischengeschaltet, um eine Antriebsdrehzahl der Motoren 14 zu untersetzen (indirekter Antrieb). Obwohl unterschiedliche Arten von Motoren zum Einsatz kommen können, ist gemäß einer bevorzugten Ausführungsform die Verwendung von Synchronmotoren vorgesehen. Dazu werden die beiden Motoren 14 parallel geschaltet und von einer gemeinsamen Steuervorrichtung 30 auf Grundlage einer Motorsteuerkurve 32 mit Strom versorgt, die in einem programmierbaren Speicher 34 der Steuervorrichtung 30 hinterlegt sein kann.

Wie den Fig. 1a bis 1c entnommen werden kann, kann die Motorsteuerkurve 32 einen Drehwinkel ϕ jedes Motors 14 angeben, wobei sich der Drehwinkel ϕ in Abhängigkeit der Zeit kontinuierlich verändert; beispielweis kann die Motorsteuerkurve 32 eine glockenkurvenartig variierenden Drehwinkelverlauf aufweisen. Die Motorsteuerkurve 32 ist dabei von der Zeit abhängig und gibt dem Drehwinkel ϕ des Motors 14 an, welcher erforderlich ist, damit der Abtriebsflansch 12 zeitabhängig einen bestimmten Weg bzw. Winkel zurücklegt. Ferner weisen auch die Antriebsnuten 20, die in den Kurventrommeln 22 ausgebildet sind, eine variable, d.h. eine nicht konstante Steigung auf, auch wenn dies hier insbesondere in der Fig. 1b nicht genau zu erkennen ist.

Die Bestromung der Motoren 14 erfolgt dabei auf Grundlage der Motorsteuerkurve 32, indem mittels eines Drehgebers (nicht dargestellt) der Ist-Drehwinkel des jeweiligen Motors 14 erfasst und dem zeitabhängigen Soll-Drehwinkel ϕ gemäß der Motorsteuerkurve 32 gegenüber gestellt wird, sodass auf Grundlage dieser Gegenüberstellung von der Steuervorrichtung 30 der dem Motor 14 zugeführte Strom geregelt werden kann. Wird nun der Abtriebsflansch 12 mittels der beiden Motoren 14 über die jeweiligen Kurventrommeln 22 auf Grundlage der in dem Speicher 34 der Steuervorrichtung 30 hinterlegten Motorsteuerkurve 32 angetrieben, so setzt sich die rotatorische Bewegung des Abtriebsflanschs 12 aus zwei Bewegungsanteilen zusammen, die sich gleichzeitig überlagern: so basiert ein Bewegungsanteil des Abtriebsflanschs 12 auf der Steigung der sich drehenden Antriebsnut 20 und ein zweiter Bewegungsanteil basiert auf der auf Grundlage der Motorsteuerkurve 32 variierenden Bestromung der Motoren 14.

Da sowohl die Steigung der Antriebsnuten 20 zumindest bereichsweise variabel ist und auch die Motorsteuerkurve 32 zumindest bereichsweise eine variable Steigung aufweist, lässt sich durch gleichzeitige Überlagerung des Bewegungsanteils, der auf einem Bereich variabler Steigung der Antriebsnuten 20 basiert, und des Bewegungsanteils, der auf einem Bereich variabler Steigung der Motorsteuerkurve 32 basiert, ein gewünschtes Bewegungsprofil des Abtriebsflanschs 12 erzielen, das beliebig komplex sein kann. Auf diese Weise lässt sich beispielsweise bei vorgewähltem Profil bzw. Steigungsverlauf der Abtriebsnuten 20 eine Optimierung des Bewegungsprofils des Abtriebsflanschs 12 durch Variation der Motorsteuerkurve 32 erzielen.

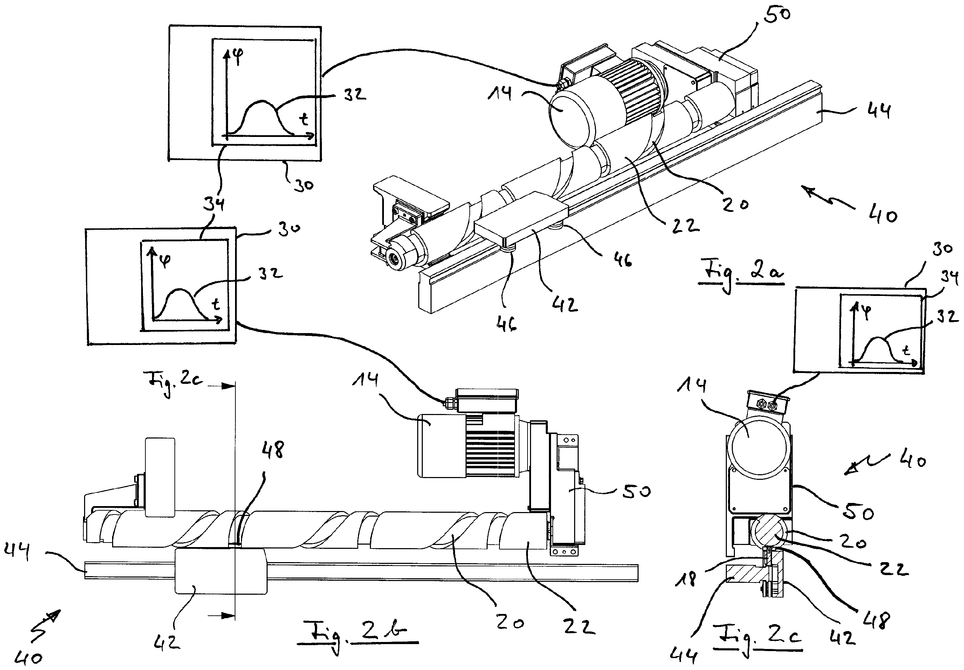

Bei der Ausführungsform gemäß den Fig. 2a bis 2c handelt es sich um ein Lineartransportsystem 40 zum Einsatz bei beispielsweise einem Linearmontagesystem. Das dargestellte Lineartransportsystem 40 weist als Transportelement einen Werkstückträger 42 auf, der mittels Rollen 46 an einer Schiene 44 gelagert ist, sodass der Werkstückträger 42 durch die Schiene 44 geführt entlang derselben zu unterschiedlichen Montagestation verfahren werden kann, die entlang des Lineartransportsystems 40 bzw. der Schiene 44 angeordnet sind. Sind die einzelnen Montagestationen weiter voneinander entfernt, können die Werkstückträger 42 mittels einer Linearmotor-Anordnung (nicht dargestellt) mit hoher Geschwindigkeit zwischen den einzelnen Montagestationen verfahren werden.

Bei der hier dargestellten Ausführungsform erfolgt der Antrieb des Werkstückträgers 42 im Bereich der Montagestation hochpräzise über eine Kurventrommel 22, die sich entlang der Schiene 44 erstreckt und von einem Motor 14 über ein Getriebe 50 angetrieben wird. Die Drehbewegung der Kurventrommel 22 wird dabei in eine Längsbewegung des Werkstückträgers 42 umgesetzt, indem ein seitlich an dem Werkstückträger 42 vorgesehener Mitnehmer 18 und insbesondere dessen Kurvenrolle 48 in einer Antriebsnut 20 eingreift, die in der Kurventrommel 22 ausgebildet ist und dieselbe spiralförmig umgibt. Durch die Drehbewegung der Kurventrommel 22 wird somit der Mitnehmer 18 mitgeschleppt, der in die spiralförmig die Kurventrommel umgebene Antriebsnut 20 eingreift, wodurch der Werkstückträger 42 entlang der Schiene 44 verfahren wird. Wie hier insbesondere der Figur 2b entnommen werden kann, weist die Antriebsnut 20 eine Steigung auf, die sich über die gesamte Länge der Kurventrommel 22 hinweg kontinuierlich verändert.

Die Bestromung des Motors 14 erfolgt auch hier wiederum mittels einer Steuervorrichtung 30 auf Grundlage einer Motorsteuerkurve 32, die in einem programmierbaren Speicher 34 der Steuervorrichtung 30 hinterlegt ist. Die Motorsteuerkurve 32 ist dabei von der Zeit abhängig und gibt dem Drehwinkel ϕ des Motors 14 an, welcher erforderlich ist, damit der Werkstückträger 42 zeitabhängig einen bestimmten Weg bzw. Hub zurücklegt. Die Bestromung des Motors 14 erfolgt dabei auf Grundlage der Motorsteuerkurve 32, indem mittels eines Drehgebers (nicht dargestellt) der Ist-Drehwinkel des Motors 14 erfasst und dem zeitabhängigen Soll-Drehwinkel ϕ gemäß der Motorsteuerkurve 32 gegenüber gestellt wird, sodass auf Grundlage dieser Gegenüberstellung von der Steuervorrichtung 30 der dem Motor 14 zugeführte Strom geregelt werden kann.

Zwar ist hier die Steigung der Motorsteuerkurve 32 ihren gesamten zeitlichen Verlauf hinweg variabel und weist insbesondere einen glockenkurvenartig variierenden Drehwinkelverlauf auf; die Motorsteuerkurve 32 kann jedoch auch nur bereichsweise eine variable Steigung aufweisen, sofern sich gleichzeitig auch die Steigung der Antriebsnut 20 verändert.

Somit lässt sich auch hier durch gleichzeitige Überlagerung eines Bewegungsanteils, der auf einem Bereich variabler Steigung der Antriebsnut 20 basiert, und des Bewegungsanteils, der auf einem Bereich variabler Steigung der Motorsteuerkurve 32 basiert, ein gewünschtes Bewegungsprofil des Werkstückträgers 42 erzielen, das beliebig komplex sein kann.

### Bezuqszeichenliste

- 10: Rundschalttisch
- 12: Drehteller bzw. Abtriebsflansch
- 14: Motor
- 16: Öffnung
- 18: Mitnehmer
- 20: Antriebsnut
- 22: Kurventrommel
- 30: Steuervorrichtung
- 32: Motorsteuerkurve
- 34: Speicher
- 40: Lineartransportsystem
- 42: Werkstückträger
- 44: Schiene
- 46: Rolle
- 48: Kurvenrolle
- 50: Getriebe

## Patentansprüche

1. Transportvorrichtung mit einem zur Aufnahme eines Werkstücks geeigneten Transportelement, das mittels eines Motors (14) rotatorisch und/oder linear von einer ersten Ruheposition in eine zweite Ruheposition bewegbar ist, wobei das Transportelement antriebswirksam mit zumindest einem Mitnehmer (18) verbunden ist, der in eine Antriebsnut (20) einer Kurventrommel (22) eingreift, die von dem Motor (14) antreibbar ist, der mittels einer programmierbaren Steuervorrichtung (30) auf Grundlage einer Motorsteuerkurve (34) ansteuerbar ist,
**dadurch gekennzeichnet, dass**
die Antriebsnut (20) zumindest bereichsweise eine variable Steigung aufweist und dass die Motorsteuerkurve (32) ebenfalls zumindest bereichsweise eine variable Steigung aufweist, wobei die Bewegung des Transportelements aus einer gleichzeitigen Überlagerung eines ersten Bewegungsanteils, der auf einem Bereich variabler Steigung der Antriebsnut (20) basiert, und eines zweiten Bewegungsanteils resultiert, der auf einem variablen Steigungsbereich der Motorsteuerkurve (32) basiert.

2. Transportvorrichtung nach Anspruch 1,
**dadurch gekennzeichnet, dass**
der Motor (14) auf Grundlage eines Bereichs variabler Steigung der Motorsteuerkurve (32) ansteuerbar ist, während sich der zumindest eine Mitnehmer (18) in einem Bereich variabler Steigung der Antriebsnut (20) befindet.

3. Transportvorrichtung nach Anspruch 1 oder 2,
**dadurch gekennzeichnet, dass**
sich der zumindest eine Mitnehmer (18) in einem Bereich variabler Steigung der Antriebsnut (20) befindet, während ein Bereich variabler Steigung der Motorsteuerkurve (32) zur Ansteuerung des Motors (14) aktiv ist.

4. Transportvorrichtung nach zumindest einem der vorstehenden Ansprüche,
**dadurch gekennzeichnet, dass**
die Motorsteuerkurve (32) einen von der Zeit abhängigen Drehwinkel (ϕ) des Motors (14) zur Erzielung eines gewünschten Bewegungsprofils des Transportelements angibt.

5. Transportvorrichtung nach zumindest einem der vorstehenden Ansprüche,
**dadurch gekennzeichnet, dass**
die Antriebsnut (20) weder an einer der ersten Ruheposition entsprechenden Stelle noch an einer der zweiten Ruheposition entsprechenden Stelle und auch nicht dazwischen einen Rastgang aufweist.

6. Transportvorrichtung nach zumindest einem der vorstehenden Ansprüche,
**dadurch gekennzeichnet, dass**
die Steigung der Antriebsnut (20) zwischen einer der ersten Ruheposition entsprechenden Stelle der Antriebsnut und einer der zweiten Ruheposition entsprechenden Stelle der Antriebsnut (20) variabel ist und insbesondere keine Bereiche konstanter Steigung aufweist.

7. Transportvorrichtung nach zumindest einem der vorstehenden Ansprüche,
**dadurch gekennzeichnet, dass**
die Motorsteuerkurve (32) zwischen einer der ersten Ruheposition entsprechenden Stelle und einer der zweiten Ruheposition entsprechenden Stelle variabel ist und insbesondere keine Kurvenbereiche mit konstanter Steigung aufweist.

8. Transportvorrichtung nach zumindest einem der vorstehenden Ansprüche,
**dadurch gekennzeichnet, dass**
das Transportelement ein Werkstückträger (42) eines Lineartransportsystems (40) ist, der entlang einer Schiene (44) des Lineartransportsystems (40) geführt ist.

9. Transportvorrichtung nach zumindest einem der Ansprüche 1 bis 7,
**dadurch gekennzeichnet, dass**
das Transportelement ein Drehteller (12) eines Rundschalttischs (10) ist.

## Claims

1. A transport apparatus having a transport element which is suitable for receiving a workpiece and which is movable in a rotary and/or linear manner by means of a motor (14) from a first position of rest into a second position of rest, wherein the transport element is drive-effectively connected to at least one entrainer (18) which engages into a drive groove (20) of a barrel cam (22) which can be driven by the motor (14) which is controllable by means of a programmable control apparatus (30) on the basis of a motor control cam (32),
**characterized in that**
the drive groove (20) has a variable pitch at least regionally; and **in that** the motor control cam (32) likewise has a variable pitch at least regionally, with the movement of the transport element resulting from a simultaneous superposition of a first movement component which is based on a region of variable pitch of the drive groove (20) and of a second movement component which is based on a variable pitch region of the motor control cam (32).

2. A transport apparatus in accordance with claim 1,
**characterized in that**
the motor (14) is controllable on the basis of a region of variable pitch of the motor control cam (32), while the at least one entrainer (18) is located in a region of variable pitch of the drive groove (20).

3. A transport apparatus in accordance with claim 1 or claim 2,
**characterized in that**
the at least one entrainer (18) is located in a region of variable pitch of the drive groove (20), while a region of variable pitch of the motor control cam (32) is active to control the motor (14).

4. A transport apparatus in accordance with at least one of the preceding claims,
**characterized in that**
the motor control cam (32) specifies a time-dependent angle of rotation (ϕ) of the motor (14) for achieving a desired movement profile of the transport element.

5. A transport apparatus in accordance with at least one of the preceding claims,
**characterized in that**
the drive groove (20) does not have a rest passage either at a position corresponding to the first position of rest or at a position corresponding to the second position of rest and also not therebetween.

6. A transport apparatus in accordance with at least one of the preceding claims,
**characterized in that**
the pitch of the drive groove (20) is variable between a position of the drive groove corresponding to the first position of rest and a position of the drive groove (20) corresponding to the second position of rest and in particular does not have any regions of constant pitch.

7. A transport apparatus in accordance with at least one of the preceding claims,
**characterized in that**
the motor control cam (32) is variable between a position corresponding to the first position of rest and a position corresponding to the second position of rest and in particular does not have any cam regions of constant pitch.

8. A transport apparatus in accordance with at least one of the preceding claims,
**characterized in that**
the transport element is a workpiece carrier (42) of a linear transport system (40) which is guided along a rail (44) of the linear transport system (40).

9. A transport apparatus in accordance with at least one of the claims 1 to 7,
**characterized in that**
the transport element is a turntable (12) of a rotary indexing table (10).

## Revendications

1. Dispositif de transport comportant un élément de transport apte à recevoir une pièce à usiner et déplaçable par un moteur (14) de manière rotative et/ou linéaire depuis une première position de repos jusque dans une deuxième position de repos, l'élément de transport étant relié en termes d'entraînement à au moins un doigt entraîneur (18) qui s'engage dans une rainure d'entraînement (20) d'un tambour à cames (22) pouvant être entraîné par le moteur (14) qui peut être piloté à l'aide d'un dispositif de commande programmable (30) sur la base d'une courbe de commande de moteur (34),
**caractérisé en ce que**
la rainure d'entraînement (20) présente une pente variable au moins localement, et **en ce que**
la courbe de commande de moteur (32) présente également une pente variable au moins localement, le mouvement de l'élément de transport résultant d'une superposition simultanée d'une première composante de mouvement, qui est basée sur une zone à pente variable de la rainure d'entraînement (20), et d'une deuxième composante de mouvement, qui est basée sur une zone à pente variable de la courbe de commande de moteur (32).

2. Dispositif de transport selon la revendication 1,
**caractérisé en ce que**
le moteur (14) peut être piloté sur la base d'une zone à pente variable de la courbe de commande de moteur (32), tandis que ledit au moins un doigt entraîneur (18) se trouve dans une zone à pente variable de la rainure d'entraînement (20).

3. Dispositif de transport de la revendication 1 ou 2,
**caractérisé en ce que**
ledit au moins un doigt entraîneur (18) est situé dans une zone à pente variable de la rainure d'entraînement (20) pendant qu'une zone à pente variable de la courbe de commande de moteur (32) est active pour piloter le moteur (14).

4. Dispositif de transport selon l'une au moins des revendications précédentes,
**caractérisé en ce que**
la courbe de commande de moteur (32) spécifie un angle de rotation (ϕ) du moteur (14) dépendant du temps pour obtenir un profil de mouvement souhaité de l'élément de transport.

5. Dispositif de transport selon l'une au moins des revendications précédentes,
**caractérisé en ce que**
la rainure d'entraînement (20) ne présente pas de phase d'arrêt, ni à un emplacement correspondant à la première position de repos, ni à un emplacement correspondant à la deuxième position de repos, ni entre les deux.

6. Dispositif de transport selon l'une au moins des revendications précédentes,
**caractérisé en ce que**
la pente de la rainure d'entraînement (20) est variable entre un emplacement de la rainure d'entraînement correspondant à la première position de repos et un emplacement de la rainure d'entraînement (20) correspondant à la deuxième position de repos, et en particulier elle ne présente pas de zones à pente constante.

7. Dispositif de transport selon l'une au moins des revendications précédentes,
**caractérisé en ce que**
la courbe de commande de moteur (32) est variable entre un emplacement correspondant à la première position de repos et un emplacement correspondant à la deuxième position de repos, et en particulier elle ne présente pas de zones de courbe à pente constante.

8. Dispositif de transport selon l'une au moins des revendications précédentes,
**caractérisé en ce que**
l'élément de transport est un porte-pièce (42) d'un système de transport linéaire (40), qui est guidé le long d'un rail (44) du système de transport linéaire (40).

9. Dispositif de transport selon l'une au moins des revendications 1 à 7,
**caractérisé en ce que**
l'élément de transport est un plateau tournant (12) d'une table à transfert circulaire (10).
